Europäisches Patentamt

European Patent Office

Office européen des brevets

(11) Publication number: **0 192 018**
A1

# (12) EUROPEAN PATENT APPLICATION

(21) Application number: 85870129.5

(22) Date of filing: 23.09.85

(51) Int. Cl.⁴: **G 05 D 23/24**

(30) Priority: 18.01.85 PT 79843

(43) Date of publication of application:
27.08.86 Bulletin 86/35

(84) Designated Contracting States:
AT BE CH DE FR GB IT LI LU NL SE

(71) Applicant: Quinhones Godinho, Luis Gonzaga
Praça José Fontana, 25-4. Esq.
P-1000 Lisboa(PT)

(72) Inventor: Quinhones Godinho, Luis Gonzaga
Praça José Fontana, 25-4. Esq.
P-1000 Lisboa(PT)

(74) Representative: Kuborn, Jacques et al,
Office Hanssens S.P.R.L. Square Marie-Louise, 40 (bte 19)
B-1040 Bruxelles(BE)

(54) High precision electronic thermostatic controller for general application.

(57) This controller is composed by a stabilized voltage rectifier (1) connected to a Wheatstone bridge resistance network (2) with one or more temperature transducers (3), with one or more control potentiometers (4), one or more voltage limiting diodes (5), one or more voltage discriminators (6) and a static or electromagnetic relay (7) with optional state indicator.

Fig. I

EP 0 192 018 A1

Croydon Printing Company Ltd

HIGH PRECISION ELECTRONIC THERMOSTATIC CONTROLLER FOR
GENERAL APPLICATION

---

The present invention relates to thermostatic
controllers, and more particularly to high precision
electronic controllers.

The desirability of maintaining a given
temperature within a certain space or a body is quite
obvious.

Generally, the narrower the temperature range, the
more expensive the controller becomes.

In US-A-4.405.080 issued to Kompelien in 1983, an
electronic temperature control from a mechanical
temperature responsive means is disclosed.

The device uses a bimetal to sense the temperature
and makes the disk member rotate which in turn causes the
built-on capacitive members to produce an unbalance that
is later on amplified and passed through a phase
discriminator.

However, the precision of this approach is not as
high as in the present invention because, among other
reasons, the components are all susceptible to temperature
changes themselves and the bimetal sensor is inherently
inaccurate.

As the inventor points out in said patent, first
paragraph of column 1, electronic thermostats that use
thermistors are presently being used but there are
problems with the components used that make them unstable.

Kompelien's attempt to solve the problem by
replacing the thermistors with capacitive components
complicated the design with less precise components,
namely the bimetal sensor used.

Here, the problem documented by Kompelien's is
resolved by providing a circuit that allows the
sensitivity of the device to come within one thousandth of
one degree centigrade with relatively common components

2                                    0192018

and an ingenious circuit combination.

Other patents describing the closest subject matter provide for a number of more or less complicated features that fail to solve the problem in an efficient and economical way.

None of these patents suggest the novel features of the present invention.

An object of the invention is to provide a high precision electronic thermostatic controller for general application, composed by a stabilized voltage power supply connected to a resistance network and a voltage comparator or operational amplifier connected to a static or electromagnetic relay.

Another object of the invention is a high precision electronic thermostatic controller for general application, which can be equipped with a control for the temperature hysteresis of the on-off switching.

Another object of the invention is a high precision electronic thermostatic controller for general application, in which the resistance network is a Wheatstone bridge with one or more resistors variable with the temperature and, at least, a setting potentiometer that can be located in any of the bridge arms or with the variable contact being the bridge top vertex.

Another object of the invention is a high precision electronic thermostatic controller for general application, in which the temperature variable resistors are the temperature transducers to be located in the proper places outside of the set and connected to it.

Another object of the invention is a high precision electronic thermostatic controller for general application which, when intended for independent setting, with the same transducer, of the on-off temperature switching, uses a twin Wheatstone bridge containing one temperature variable resistor and two setting potentiometers located in outside arms of the twin bridge.

Another object of the invention is a high precision electronic thermostatic controller for general application which uses as bridge discriminators voltage comparator electronic circuits or operational amplifiers.

Another object of the invention is a high precision electronic thermostatic controller for general application in which the discriminators are protected against temperature transducers connections, short-circuits or open circuits by voltage limiting diodes and by proper selection of the Wheatstone bridge resistance values.

Another object of the invention is a high precision electronic thermostatic controller for general application provided with an output relay (static or electromagnetic) operated by the discriminator signal to control the power supply to the consumers.

Another object of the invention is a high precision electronic thermostatic controller for general application which, in the very high precision version (laboratory type level version) is (for all practical effects) insensitive to ambient temperature fluctuations as it is installed in a stabilized temperature thermostatic chamber; this version is equipped with electromagnetic shielding.

On the drawings,

Figure 1 is a schematic drawing of the thermostatic controller according to one embodiment of the invention,

Figure 2 is a schematic drawing of another embodiment of the invention, and

Figure 3 represents still another embodiment of the invention.

The basic technical characteristics of the embodiments of the invention comprise:

1. Stabilized voltage rectifier composed of

a)- Transformer with input voltage in accordance with the network voltage

b)- Secundary voltage rectifier

c)- High precision voltage stabilizer for power supply of components

    - or voltage supply from any D.C. stabilized source.

2. Resistance network connected in Wheatstone bridge (or twin Wheatstone bridge according to the cases) composed by:

a)- one or more resistances variable with the temperature to be controlled (transducers)

    The transducers used must be in accordance with the ambient conditions where they are going to be installed as well as with the temperature range to be controlled.

b)- one or more adjusting potentiometers.

c)- several complementary fixed resistors.

3. Wheatstone bridge discriminators composed by electronic voltage comparators or operational amplifiers.

4. Output control relay operated by the discriminators above referred in 3) with optional state indicator.

5. Protections

a)- Imput fuse for overall protection.

b)- Fuse for protection of the electronic components.

c)- Voltage limiting diodes for discriminator protection against temperature transducers connection faults, protection effectively obtained by proper relationship with the Wheatstone resistance values.

   The temperature hysteresis as well as the slue rate are dependent, firstly from the transducers resistance slope, and secondly from the thermal inertia of the same transducers.

   The slue rate of the equipment under question is far higher than the thermal inertia of the above referred transducers, having no practical influence in the response time of the whole assembly.

   For operation in the absolute temperature mode a single transducer in enough, while for operation in the differential temperature mode (relative temperature) two transducers are used.

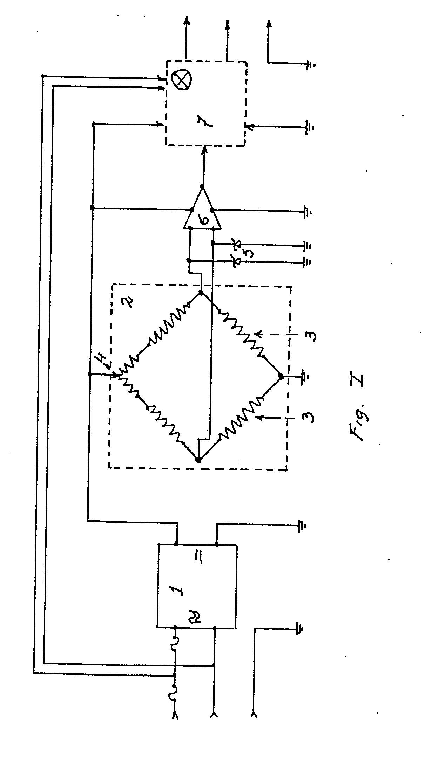

Referring now to the drawings, the basic version of the thermostatic controller according to the invention is shown in Figure 1, and comprises a stabilized voltage power supply (1), a Wheatstone bridge resistance network (2), including transducers (3) and a potentiometer (4), voltage limiting diodes (5), a discriminator (6) and a static or electromagnetic relay (7).

A) Physical characteristics

The device is realized as:

- Assembly box with power plug and socket with or without ground connector.

- One adjusting potentiometer and two bipolar sockets (preferably of the coaxial type) for the temperature transducers connection.

It can also include:

- Optional optical state indication.

- Optional hysteresis control when intended for use with equipments that should not be submitted to frequent on-off switching.

B) Technical characteristics

- Great insensitivity to power supply voltage fluctuations.

- Very low sensitivity to changes of ambient temperature.

- When the hysteresis control is not installed or is out of circuit the precision of this controller at 25° centigrade is of the order of the hundreth of a centigrade degree.

- The hysteresis can be easily implemented for temperature differences of several degrees, keeping the above referred precision for the on and off temperature operations.

- A version with smaler hysteresis can be easily obtained by the addition of a standard electronic component.

C) Fields of application

This equipment has domestic and industrial application in the following fields:

a)- Temperatures above regulated level (for instance: refrigerators control, cooling and air conditioners).

b)- Temperatures below the regulated level (for instance any type of heating).

c)- Positive temperature differentials above the regulated level (for instance, automatic start and stop of kitchen exhausters and, in general, of equipments for the evacuation of heated gases and fluids.

d)- Negative temperature differentials bigger than the regulated level (for instance, winter heating control of transition zones for the street from heated buildings and evacuation of cooled gases and fluids).

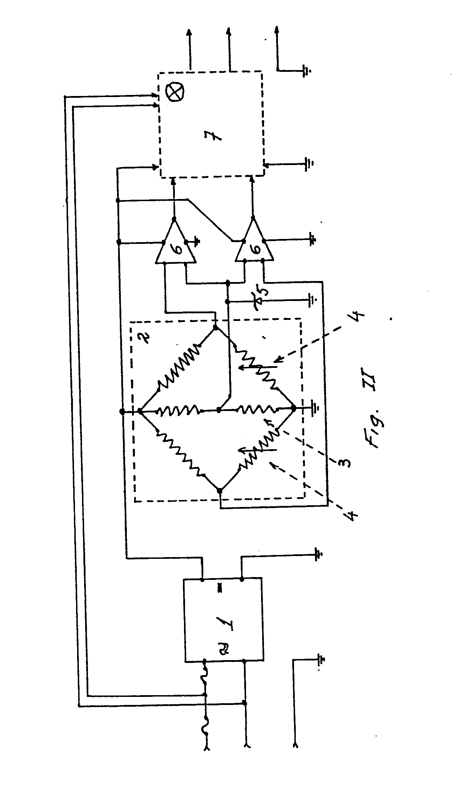

A duplex version shown in Figure 2 comprises a stabilized voltage power supply (1), a Wheatstone bridge twin resistance network (2) including a transducer (3) and potentiometers (4), voltage limiting diodes (5), discriminators (6) and a static or electromagnetic relay (7)

A) Physical characteristics

This version is a hybrid version of the basic version.

Essentially, it has a single temperature transducer, independent controls for the on and off temperatures operation, two discriminators and a twin Wheatstone bridge.

B) Technical characteristics

- They are basically the same as in the basic version.
- Replaces with advantages the hysteresis control implementation in the basic version as it assures a easier setting and a bigger temperature hysteresis.

C) Fields of application

Open and close control of valves at different temperature levels, start and stop control of exhausters at different temperature levels etc.

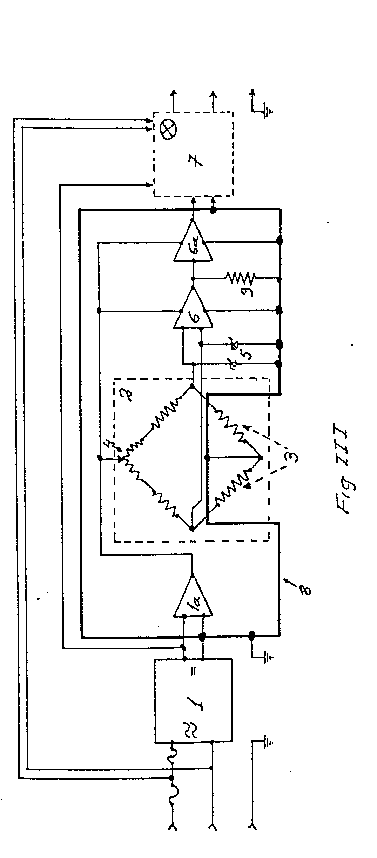

A laboratory level version shown in Figure 3 comprises a stabilized voltage power supply (1), a (second step) high precision voltage stabilizer (1a), a Wheatstone bridge resistance network (2) comprising transducers (3) and potentiometers (4), voltage limiting diodes (5), first step discriminator (6), second step discriminator (6a), a static or electromagnetic relay (7), a thermostatic chamber (8) enclosing elements 1a, 4, 5, 6, 6a, and current drain resistor (9)

A) Physical characteristics

It is a sophisticated implementation of the basic version from which it diverges in the following:

1. The electronic circuit that must not be affected by ambient conditions is installed in a constant temperature chamber with electromagnetic shielding.

2. The input and output connections are equipped with electric filters to avoid parasitics.

3. The output signal of the Wheatstone bridge is discriminated by a two stage high precision integrated circuit discriminator.

4. The voltage stabilization is performed at a more precise level.

5. All the resistors used (exception for the transducers) are of high standard type.

B) Technical characteristics

Basically it is the improvement of the basic version capabilities, namely, a more precise level stabilization of the voltage supply for the critical electronic circuits, insensitivity to the ambient temperature, insensitivity to strong electric or magnetic fields and a precision that theoretically is better than a thousandth of a centigrade degree at 25° centigrade.

C) Fields of application

Very high precision laboratory level controls.

0192018

CLAIMS

1. High precision electronic thermostatic controller for general application, characterized by being composed by a stabilized voltage power supply (1, 1a) connected to a resistance network (2) and a voltage comparator or operational amplifier (6, 6a) connected to a static or electromagnetic relay (7).

2. High precision electronic thermostatic controller for general application, as per claim 1, characterized in that the set can be equipped with a control for the temperature hysteresis of the on-off switching.

3. High precision electronic thermostatic controller for general application, as per claim 1, characterized in that the resistance network (2) is a Wheatstone bridge with one or more resistors (3) variable with the temperature and, at least, a setting potentiometer (4) that can be located in any of the bridge arms or with the variable contact being the bridge top vertex.

4. High precision electronic thermostatic controller for general application, as per claim 1 and 3, characterized in that the temperature variable resistors (3) are the temperature transducers to be located in the proper places outside of the set and connected to it.

5. High precision electronic thermostatic controller for general application, as per claim 1, characterized in that, when intended for independent setting (Fig. 2), with the same transducer (3), of the on-off temperature switching, it uses a twin Wheatstone bridge containing one temperature variable resistor (3) and two setting potentiometers (4) located in outside arms of the twin bridge.

6. High precision electronic thermostatic controller for general application, as per claim 1, characterized in that it uses as bridge discriminators voltage comparator electronic circuits or operational amplifiers (6, 6a).

7. High precision electronic thermostatic controller for general application, as per claim 6, characterized in that the discriminators are protected against temperature transducers connections, short-circuits or open circuits by voltage limiting diodes (5) and by proper selection of the Wheatstone bridge resistance values.

8. High precision electronic thermostatic controller for general application, as per claim 1, characterized in that it has an output relay (7) (static or electromagnetic) operated by the discriminator signal to control the power supply to the consumers.

9. High precision electronic thermostatic controller for general application, as per claim 1, characterized in that it is installed in a stabilized temperature thermostatic chamber (8), and is equipped with electromagnetic shielding, whereby to make this very high precision version (laboratory type level version) insensitive, for all practical effects, to ambient temperature fluctuations.

Fig. I

Fig. II

Fig III

0192018

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | GB-A-2 027 612 (MEYER ALUMINIUM)<br>* page 2, line 112 - page 3, line 57; figure 2 * | 1,3,4, 6,8 | G 05 D 23/24 |
| | --- | | |
| A | US-A-4 463 576 (BURNETT et al.)<br>* column 3, line 30 - column 4, line 24; figure 2 * | 2,5,8 | |
| | --- | | |
| A | US-A-4 042 875 (COULMANCE et al.)<br>* abstract; column 1, line 63 - column 3, line 24; claim 1; figure 1 * | 2,5,6 | |
| | --- | | |
| A | DE-A-3 213 156 (HOFMANN)<br>* page 12, line 8 - page 13, line 18; figure 1 * | 1,3 | TECHNICAL FIELDS SEARCHED (Int. Cl 4) |
| | --- | | G 05 D 23/19 |
| A | DE-B-1 523 311 (DOLD)<br>* claim 1; column 4, line 26 - column 6, line 30; figure 1 * | 3,5 | G 05 D 23/20<br>G 05 D 23/24<br>G 01 K 1/00<br>G 01 K 7/00 |
| | --- | | |
| A | US-A-3 979 642 (CATH et al.)<br>* abstract; figure 1 * | 7 | |
| | ---     -/- | | |

The present search report has been drawn up for all claims

| Place of search | Date of completion of the search | Examiner |
|---|---|---|
| BERLIN | 09-04-1986 | BEITNER M.J.J.B. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int Cl.4) |
|---|---|---|---|
| A | TECHNISCHES MESSEN, vol. 50, no. 7/8, July/August 1983, pages 277-283, München; G. LEBELT "Drift- und rauscharme Messkette für Widerstandsabhängige Aufnehmer" * page 277; page 279, chapter 3.2 - page 283; figures 1,7,9,11 * | 1,4,9 | |

-----

TECHNICAL FIELDS SEARCHED (Int. Cl.4)

The present search report has been drawn up for all claims

| Place of search | Date of completion of the search | Examiner |
|---|---|---|
| BERLIN | 09-04-1986 | BEITNER M.J.J.B. |